# FASCICULE DE BREVET EUROPEEN

(11) **EP 4 072 818 B1**
(45) Date de publication et mention de la délivrance du brevet: **06.08.2025**
(21) Numéro de dépôt: 20842015.8
(22) Date de dépôt: 08.12.2020
(51) Int. Cl.: B29C 43/00, B29C 43/56, B29C 67/04, B29C 43/34, B29K 1/00, C08J 5/04

(54) **PROCEDE DE FABRICATION D'UNE PIECE SOLIDE PAR TRAITEMENT DE FRITTAGE A CHAUD D'AU MOINS UNE MATIERE ORGANIQUE SOLIDE**
VERFAHREN ZUR HERSTELLUNG EINES MASSIVTEILS DURCH HEISSSINTERBEHANDLUNG VON MINDESTENS EINEM FESTEN ORGANISCHEN MATERIAL
METHOD FOR MANUFACTURING A SOLID PART BY HOT SINTERING TREATMENT OF AT LEAST ONE SOLID ORGANIC MATERIAL

(30) Priorité: 09.12.2019 FR 1913959
(43) Date de publication de la demande: 19.10.2022
(73) Titulaire: SINTERMAT, 21150 Venarey-les-Laumes (FR)
(72) Inventeur: NAIMI, Foad, 21150 VENAREY-LES-LAUMES (FR)
(74) Mandataire: IP Trust
(86) Numéro de dépôt international: PCT/FR2020/052345
(87) Numéro de publication internationale: WO 2021/116598

(56) Documents cités:
- WO-A1-2019/077112
- CA-A1- 2 238 285
- CN-A- 101 817 692
- FR-A1- 2 232 434
- JP-A- H11 307 379
- SURAJ SHARMA ET AL: "Water Aided Fabrication of Whey and Albumin Plastics", JOURNAL OF POLYMERS AND THE ENVIRONMENT ; FORMERLY: 'JOURNAL OF ENVIRONMENTAL POLYMER DEGRADATION', KLUWER ACADEMIC PUBLISHERS-PLENUM PUBLISHERS, NE, vol. 20, no. 3, 5 July 2012 (2012-07-05), pages 681 - 689, XP035112387, ISSN: 1572-8900, DOI: 10.1007/S10924-012-0504-8

## Description

### Domaine de l'invention

La présente invention concerne le domaine du frittage à chaud, pour la fabrication de matériaux et d'articles solides.

Le frittage (sintering en anglais) est un procédé connu surtout dans l'élaboration des matériaux céramiques ou métalliques consistant à passer d'un matériau pulvérulent à un solide massif. Le frittage a pour effet la conversion de la poudre vers un état solide de compacité plus ou moins aboutie. La conversion de la poudre en un solide dense a lieu par changement de la forme des grains de poudre, par le remplacement des interfaces solide-gaz par des interfaces solide - solide et par la disparition de la porosité.

D'un point de vue thermodynamique, le frittage est un phénomène thermiquement activé qui permet la transition de poudres ou de systèmes poreux vers un état d'équilibre thermodynamique via une réduction d'énergie libre de surface.

D'un point de vue physique, le frittage est un traitement thermique permettant de lier des particules pour former une structure cohérente et solide, à l'aide de mécanismes de transport de matière qui se déroulent souvent à l'échelle atomique. La liaison conduit à une amélioration des propriétés mécaniques de la structure et à une diminution de l'énergie du système.

Le frittage est très généralement utilisé pour des poudres métalliques ou céramiques, mais on a aussi proposé de l'appliquer à des matériaux solides organiques tels que la cornes et plus généralement les protéines fibreuses ou scléroprotéines.

### État de la technique

On connaît dans l'état de la technique la demande de brevet européenne WO2019077112 concernant un procédé de fabrication d'une pièce sous forme d'un bloc solide à partir d'un matériau naturel sous forme particulaire contenant des scléroprotéines. Ce procédé comprend une phase de chauffage du matériau sous compression à une pression supérieure ou égale à 30 MPa, à une température supérieure ou égale à la température de dénaturation des scléroprotéines contenues dans le matériau. Il comprend ensuite une phase de refroidissement du matériau ainsi obtenu jusqu'à une température inférieure à 100 °C, en maintenant la compression pendant au moins une partie de la phase de refroidissement.

Cette solution concerne un domaine applicatif très particulier, celui du frittage de scléroprotéines ou protéines fibreuses, insolubles à l'eau, regroupant les protéines telles que le collagène, l'élastine et la kératine, qui sont très résistantes et forment souvent la « carapace » d'un organisme vivant. Cette solution souligne l'importance de la présence d'un taux de scléroprotéines élevé, d'au moins 50%.

Ces matériaux résistent à des pressions et température élevées, et permettent de ce fait un frittage les soumettant à des conditions sévères pour former des pièces massives. Cette solution de l'art antérieur est liée à une pression de compression élevée à haute température pour obtenir une matière solide, et au maintient de cette pression au-dessus de 30 bars non seulement pendant le frittage à haute température, mais aussi après, pendant la phase de refroidissement.

On connaît aussi l'article Sharma, Suraj & Luzinov, Igor. (2012). Water Aided Fabrication of Whey and Albumin Plastics. Journal of Polymers and the Environment. 20. 10.1007/s10924-012-0504-8 décrivant une solution de fabrication de plastiques à partir de protéines de lactosérum et d'albumine et décrit les propriétés des plastiques fabriqués à partir de ceux-ci. Ces biomasses de protéines ont été plastifiées à l'aide d'eau et moulées par compression dans des échantillons de plastique. Les résultats ont indiqué l'importance de l'eau sur la plastification pendant la fabrication et sur les performances mécaniques plus tard en raison de la densification pendant le séchage.

Le brevet CA2238285 décrit un procédé de formation d'articles à base de protéines de grain biodégradables solides, non comestibles, dans lequel une formulation de protéine de grain est chauffée à une température maximale allant jusqu'à environ 80 ° C pour créer un mélange sensiblement homogène et fluide qui peut être transformé en un mélange biodégradable. des articles. La formulation comprend d'environ 20 à 85% en poids de protéine de grain, d'environ 5 à 75 96 en poids d'amidon jusqu'à environ 14% en poids d'eau, d'environ 10 à 40% en poids de plastifiant et au moins environ 0,01% en poids. poids d'un agent réducteur tel que le bisulfite de sodium pour cliver les liaisons disulfure présentes dans la protéine de grain. Des ingrédients facultatifs tels que des charges, des fibres, des lubrifiants / agents de démoulage et des colorants peuvent également être utilisés. Les formulations peuvent être traitées dans un équipement d'extrusion ou de moulage par injection pour créer des articles solides.

Le brevet JH11307379 décrit un procédé pour améliorer l'orientation d'une poudre de matière première en remplissant une poudre de matière première pour un aimant R-Fe-B dans un moule et en orientant la poudre de matière première dans un champ magnétique supraconducteur.

Le brevet FR2232434 décrit un matériau pour panneaux de moulage par compression est constitué de sarments de vigne écrasés ou en morceaux de différentes longueurs, dans un liant qui peut être de la résine, du plastique, du plâtre, du ciment, etc.

On connaît aussi le brevet CN101817692 concernant un procédé de préparation de bois céramique avec une résine de lignine qui comprend les étapes suivantes :
- préparation d'une résine phénolique modifiée à la lignine à partir de lignine solvant ;
- mélanger et tremper la résine phénolique modifiée à la lignine avec de la farine de bois ou de la poudre de coque ; et enfin
- la réalisation d'un procédé de pressage à chaud et d'un procédé de frittage pour obtenir la céramique de bois poreuse modifiée à la lignine.

### Inconvénients de l'art antérieur

La solution de l'art antérieur concerne des matières organiques d'un type particulier, les scléroprotéines telles que la corne, le cuir, qui sont des matériaux solides et durs, supportant des pressions élevées nécessaires pour obtenir un frittage selon ce procédé. Toutefois, l'application de pression élevées, supérieures à 30 MPa, nécessite des presses puissantes et limite la mise en œuvre à des matières organiques jouant un rôle structurel et constitutif.

Les solutions de l'art antérieur ne sont pas adaptées à des matériaux plus fragiles, tels que des drèches frais, des matières végétales, du liège, et sarments de vigne, des feuillages ou des fleurs.

La réalisation de ces pièces présente des problématiques de dégazage. Ce point est d'autant plus marqué que le volume de poudre est important. Cette problématique favorise une usure prématurée voire une rupture des éléments constituant le moule, c'est-à-dire l'outillage constitué d'une matrice et de pistons de compression. Ils ont aussi observé que les pièces frittées à partir de matériaux comprenant partiellement ou totalement de la matière organique s'effritent aisément et ne possèdent pas les caractéristiques souhaitées en termes d'esthétisme (aspect de surface), en termes de densité (peu de tenue mécanique ou densité inférieure à la densité théorique), en termes de phases (formation de phases secondaires,....)

En conclusion les grandes dimensions piègent des gaz. Le cycle de dégazage est détaillé par la suite.

### Solution apportée par l'invention

Afin de remédier à ces inconvénients, la présente invention concerne selon son acception la plus générale un procédé de fabrication d'une pièce solide par traitement de frittage à chaud d'au moins une matière organique solide broyée où
- Une phase de chauffage de ladite matière organique broyée, à une pression P₁, pour atteindre une température critique T_{C} comprise entre T_{dégradation} et T_{dénaturation} où :
   ∘ T_{dégradation} désigne la température de dégradation de la protéine constitutive de ladite matière organique présentant la plus basse température de dégradation,
   ∘ T_{dénaturation} désigne la température de dénaturation de la protéine constitutive de ladite matière organique présentant la plus basse température de dénaturation mais idéalement la T_{dénaturation} la plus haute
   o La pression P₁ est comprise entre 10 MPa et 30 MPa, lorsque ladite matière organique solide forme une seule couche de matière d'une seule nature dans ladite chambre, et supérieure à 10MPa, de préférence comprise entre 10 MPa et 60 MPa lorsque ladite matière organique forme dans ladite chambre au moins deux couches, d'une première couche d'une matière organique d'une première nature et une deuxième couche d'une matière organique d'une seconde nature différente de ladite première nature
- Une phase de maintien ou non en température à ladite température critique T_{C} pendant une durée comprise entre zéro une minute et 60 minutes,
- Une phase de refroidissement sous contrainte, à une pression P₂.

Selon une première variante de l'invention, l'étape de chauffage est réalisée dans une chambre de compression.

Selon une deuxième variante de l'invention, l'étape de chauffage est réalisée par plateau chauffant.

Selon une troisième variante de l'invention, l'étape de chauffage est réalisée par induction.

Selon une variante particulière de l'invention, le procédé susvisé est appliqué sur des matières organiques solides, optionnellement broyées, d'au moins deux natures différentes. Certaines matières telles que la balle de riz ne nécessitent pas de broyage préalable.

Avantageusement lesdites matières organiques solides naturelles différentes constituent un mélange.

Selon une alternative, lesdites matières organiques solides naturelles différentes constituent des couches superposées.

Selon un mode de mise en œuvre particulier, ledit traitement de frittage à chaud est un traitement par frittage SPS avec champs électrique.

Avantageusement, la température de dégradation T_{dégradation} et/ou ladite température de T_{dénaturation} est déterminée par la calorimétrie différentielle à balayage (DSC-differential Scanning Calorimetry) de ladite matière organique broyée ou non.

Selon une variante avantageuse, ladite température critique T_{C} est supérieure à Tₘᵢₙ correspondant à la température de dénaturation de la protéine constitutive de ladite matière organique présentant la plus haute température de dénaturation.

De préférence le procédé comporte en outre une deuxième séquence de montée en température jusqu'à une température critique T_{C2} supérieure à T_{C} et inférieure à T_{dégradation} et de maintien en pallier, après ladite première étape de maintien en pallier et avant l'étape de refroidissement,

Avantageusement, la pression Pₘₐᵢₙₜᵢₑₙ pendant l'étape de maintien en température est supérieure à la pression P₁ pendant l'étape de montée en température.

Selon un mode de mise en œuvre particulier, ladite pression pendant l'étape de maintien en température oscille régulièrement ou sporadiquement entre une valeur Pₘᵢₙ et une valeur Pₘₐₓ.

Avantageusement, la pression pendant ladite deuxième étape de maintien en température oscille régulièrement ou sporadiquement entre une valeur Pₘᵢₙ et une valeur Pₘₐₓ, avec Pₘᵢₙ supérieur à la pression P₁ pendant la première étape de montée en température.

Avantageusement, ladite étape de refroidissement est réalisée à une vitesse V₁ supérieure à 15 °C/mn jusqu'à une température de 40°C (degrés Celsius).

Selon une variante, ladite étape de refroidissement comporte une première phase de refroidissement rapide à une vitesse V₁ suivie par au moins une deuxième phase de refroidissement lente à une vitesse V₂ inférieure à V₁.

L'invention concerne aussi un article solide obtenu par l'application d'un procédé de fabrication susvisée, ladite matière organique solide étant de nature végétale.

Selon une variante, que ladite matière organique solide comprend des kératines.

Selon une variante, ladite matière organique solide comprend du collagène.

Selon une variante, ladite matière organique solide comprend de la conchyoline.

Selon une variante, ladite matière organique solide comprend des fibroïnes.

Selon une variante, ladite matière organique solide comprend de la lignine.

Selon une variante, ladite matière organique solide comprend des sarments de vigne.

L'invention concerne aussi des couverts ou de la vaisselle alimentaires obtenu par l'application d'un procédé de fabrication susvisé, ladite matière organique solide comprenant des constituants végétaux.

### Description d'un exemple de réalisation de l'invention

La présente invention sera mieux comprise à la lecture de la description qui suit, concernant un exemple non limitatif de réalisation de l'invention, illustré par les dessins annexés où :
- La figure 1 représente une vue schématique d'une installation pour la mise en œuvre du procédé
- La figure 2 représente les courbes d'évolution de la température et de la pression en fonction du temps.

### Description de l'équipement de frittage

Le procédé de fabrication selon l'invention est mis en œuvre avec un équipement de frittage connu dans l'art antérieur, avec un paramétrage inhabituel.

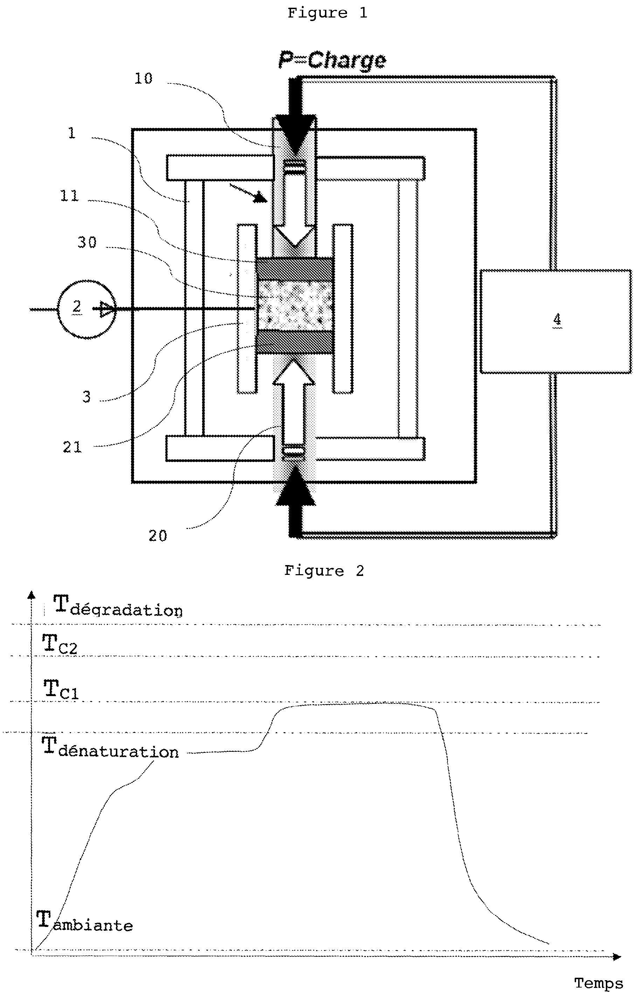

Une installation de frittage typique est représentée en figure 1. Elle est constituée par une chambre (1) qui est optionnellement reliée à une pompe à vide (2) ou selon une variante reliée à un système capable de fournir diverses atmosphères de travail (azote, hydrogène ou argon), ou simplement à l'air libre. Un système hydraulique, contrôlées par un circuit de commande, permet de délivrer des contraintes uniaxiales à l'échantillon (30) par l'intermédiaire de deux pistons (10, 20). L'échantillon (30) est introduit dans un moule en acier ou graphite(3), optionnellement associé à un système de refroidissement permettant d'évacuer les calories par exemple par circulation d'un fluide caloporteur dans des conduits formées dans les parois du moule (3).

L'invention n'est pas limitée à un fonctionnement en mode « SPS » (Spark Plasma Sintering) ou « Frittage Flash », mais optionnellement comprend un générateur électrique qui permet de soumettre l'échantillon à des tensions électriques pouvant atteindre 10V et une intensité comprise entre 0 et 24000A, afin de produire un chauffage au sein de l'échantillon. Ce courant peut être continu ou pulsé, typiquement avec des caractéristiques paramétrables des impulsions, par exemple :
- le temps ON d'un pulse pouvant être compris entre 1 et 255ms,
- le temps OFF d'un pulse compris entre 0 et 255ms,
- le nombre de répétition n de pulses pour une période comprise entre 0 et 255,
- le temps de pause entre chaque période de pulse qui est compris entre 0 et 255ms.

La charge uniaxiale maximale peut-être programmée entre une valeur minimale de 20kN et une valeur maximale de 3200kN. Une force minimale de 20kN ou une pression minimale de 5MPa assure un bon contact électrique entre les différents éléments et facilite le passage du courant dans le cas d'un traitement par frittage flash.

L'ensemble des éléments de l'installation (chambre, piston de compression, transformateur...) est refroidi par une circulation d'eau, avec une eau qui est maintenue entre 5 et 30°C. La qualité de l'eau de refroidissement est primordiale pour le bon fonctionnement de l'équipement. Il est nécessaire de limiter l'embouage et l'entartrage de l'équipement pour limiter l'encrassement interne du circuit d'eau, ayant pour effet de réduire les performances hydrauliques et, par conséquent, thermiques.

### Nature des matières organiques solides

De manière surprenante, un paramétrage inhabituel permet de traiter des matériaux autres que ceux connus par l'homme du métier (les métaux et alliages, les céramiques, les composites les polymères, les scléroprotéines).

Les matières organiques solides végétales peuvent être traitées par un choix judicieux des paramètres de pression et de température, et notamment :
- Les drèches (résidus du brassage des céréales) broyés pour former des poudres microniques ou millimétriques
- Les bois et écorces broyés pour former des poudres microniques ou millimétriques, notamment du liège broyé ou des ceps de vigne
- Du marc de café
- Des matières naturelles contenant des kératines
- Des matières naturelles contenant du collagène
- Des sarments de vigne
- Des matières naturelles contenant de la lignine
- Des matières naturelles contenant de la conchyoline
- Des matières naturelles contenant de la fibroïne

### Procédé de traitement

Compte tenu des spécificités de ces matériaux organiques solides a priori non adaptés à un traitement par frittage et a fortiori par frittage flash, l'invention porte sur un procédé consistant à préparer un broyat de matière organique avec une granulométrie comprise entre 5µm et 1mm.

Le broyat peut également être formé de copeaux de plus grandes dimensions.

Cet échantillon est introduit dans la matrice (30) entre deux pistons (11, 21) présentant la forme finale souhaitée après traitement. Puis les poudres sont comprimées, de manière uniaxiale, sous une pression adaptée à la densité à cru mais aussi en fonction de la compressibilité de la poudre, avec une pression n'excédant pas 30 MPa.

De préférence, la poudre est pré-compactée dans une presse manuelle avant d'être introduite dans la matrice.

La matrice peut être d'abord déposée sur une table vibrante pour améliorer homogénéité, avant introduction dans l'installation de frittage.

Une des caractéristiques clés du procédé selon l'invention est la température critique T_{C} atteinte en pallier, assurant un fusion partielle surfacique des grains sans dégrader les constituants organiques naturels.

La température critique T_{C} est comprise entre la température de dégradation T_{dégradation} et la température de dénaturation T_{dénaturation}.
- T_{dégradation} désigne la température de dégradation de la protéine constitutive de ladite matière organique présentant la plus basse température de dégradation,
- T_{dénaturation} désigne la température de dénaturation de la protéine constitutive de ladite matière organique présentant la plus basse température de dénaturation idéalement la plus haute température de dénaturation.

La détermination de la température de dégradation T_{dégradation} peut être réalisée par DSC. La calorimétrie différentielle à balayage (en anglais, Differential Scanning Calorimetry ou DSC) est une technique d'analyse thermique. Elle mesure les différences des échanges de chaleur entre un échantillon à analyser et une référence (par exemple alumine, mais peut aussi être de l'air).

Elle permet de déterminer les transitions de phase :
- la température de transition vitreuse (T_{g}) des matériaux amorphes : polymères, verres (Inorganiques, organiques ou métalliques) et des liquides ioniques ;
- les températures de fusion et de cristallisation ;
- les enthalpies de réaction, pour connaître les taux de réticulation de certains polymères.

La température de dégradation T_{dégradation} correspond au point d'inflexion de la courbe masse(température). Dans le cas d'un mélange de matières biologiques, la température de dégradation T_{dégradation} correspond au premier point d'inflexion de la courbe. La température de dénaturation T_{dénaturation} peut être déterminée par un suivi du processus de dénaturation du matériau soumis à une rampe de température de manière spectroscopique et mesurer la température de fusion, grâce à l'effet hyperchrome.

### Cycle de frittage

Une fois que le moule chargé de la poudre pré-comprimée est introduit dans l'installation de frittage, on procède à une étape de chauffage par application d'un champ électrique, ou avec des plateaux chauffant ou par induction simultanément à une augmentation de la pression, jusqu'à atteindre la température T_{C1} supérieure à la température de dénaturation T_{dénaturation} et inférieure à la température de dégradation T_{dégradation} pour une pression comprise entre 10 Mpa et 30 Mpa; et de préférence entre 10 Mpa et 25 Mpa.

On maintient ensuite la température et la pression en pallier, pendant une durée comprise entre 0 minute et 60 minutes, avant d'appliquer une nouvelle rampe de température pour atteindre une deuxième température critique T_{C2} supérieure à la température T_{C1} et inférieure à la température de dégradation T_{dégradation}.

On maintient à nouveau l'échantillon en pallier avant d'appliquer un refroidissement rapide, par exemple un injectant de l'azote liquide dans des conduits formés dans la paroi du moule.

### Applications

Le procédé selon l'invention permet de fabriquer des articles solides biodégradables, notamment lorsque la matière organique est d'origine exclusivement naturelle, tels que des couverts, des articles de vaisselles, des articles décoratifs.

### Exemples de mise en œuvre de l'invention

### Exemple 1

frittage cuir à 15MPa
frittage bois à 15MPa
Assemblage massif-massif

### Exemple 2

frittage cuir à 15MPa et frittage du bois à 15MPa sous forme poudre sur le disque de cuir fritté au préalable
massif -poudre

### Exemple 3

frittage cuir et du bois à 15MPa sous forme poudre superposée poudre - poudre

### Exemple 4

Mélange cuir bois 25-75% & 50-50% et 75-25%

## Revendications

1. Procédé de fabrication d'une pièce solide par traitement de frittage à chaud d'au moins une matière organique solide contenant moins de 40% de scléroprotéines le procédé comprenant:
• Une phase de chauffage de ladite matière, à une pression P₁ pour atteindre une température critique T_{C} comprise entre T_{dégradation} et T_{dénaturation} où :
∘ T_{dégradation} désigne la température de dégradation de la protéïne constitutive de ladite matière organique présentant la plus basse température de dégradation,
∘ T_{dénaturation} désigne la température de dénaturation de la protéine constitutive de ladite matière organique présentant la plus basse température de dénaturation
o La pression P₁ est comprise entre 10 MPa et 25 MPa, lorsque ladite matière organique solide forme une seule couche de matière d'une seule nature dans ladite chambre, et supérieure à 10 MPa lorsque ladite matière organique forme dans ladite chambre au moins deux couches, d'une première couche d'une matière organique d'une première nature et une deuxième couche d'une matière organique d'une seconde nature différente de ladite première nature
• Une phase de maintien en température à ladite température critique T_{C} pendant une durée inférieure à soixante minutes,
• Une phase de refroidissement sous contrainte, à une pression P₂.

2. Procédé de fabrication d'une pièce solide par traitement de frittage à chaud selon la revendication 1 caractérisé en ce ladite phase de chauffage est réalisée dans une chambre de compression.

3. Procédé de fabrication d'une pièce solide par traitement de frittage à chaud selon la revendication 1 caractérisé en ce ladite phase est réalisée par plateau chauffant.

4. Procédé de fabrication d'une pièce solide par traitement de frittage à chaud selon la revendication 1 caractérisé en ce ladite phase est réalisée par induction.

5. Procédé de fabrication d'une pièce solide par traitement de frittage à chaud selon la revendication 1 **caractérisé en ce qu'**il est appliqué sur des matières organiques solides broyées ou non d'au moins deux natures différentes.

6. Procédé de fabrication d'une pièce solide par traitement de frittage à chaud selon la revendication 5 **caractérisé en ce que** lesdites matières organiques solides de natures différentes constituent un mélange.

7. Procédé de fabrication d'une pièce solide par traitement de frittage à chaud selon la revendication 5 **caractérisé en ce que** lesdites matières organiques solides broyées natures différentes constituent des couches superposées.

8. Procédé de fabrication d'une pièce solide par traitement de frittage à chaud selon la revendication 1 **caractérisé en ce que** ledit traitement de frittage à chaud est un traitement SPS avec champs électrique.

9. Procédé de fabrication d'une pièce solide par traitement de frittage à chaud selon la revendication 1 **caractérisé en ce que** ladite température de dégradation T_{dégradation} et/ou ladite température de dénaturation T_{dénaturation} est déterminée par DSC de ladite matière organique.

10. Procédé de fabrication d'une pièce solide par traitement de frittage à chaud selon la revendication 1 **caractérisé en ce que** ladite température critique T_{C} est supérieure à Tₘᵢₙ correspondant à la température de dénaturation de la protéine constitutive de ladite matière organique présentant la plus haute température de dénaturation.

11. Procédé de fabrication d'une pièce solide par traitement de frittage à chaud selon la revendication 1 **caractérisé en ce qu'**il comporte en outre une deuxième séquence de montée en température jusqu'à une température critique T_{C2} supérieure à T_{C} et inférieure à T_{dégradation} et de maintien en pallier, après ladite première étape de maintien en pallier et avant l'étape de refroidissement.

12. Procédé de fabrication d'une pièce solide par traitement de frittage à chaud selon la revendication 1 **caractérisé en ce que** la pression Pₘₐᵢₙₜᵢₑₙ pendant l'étape de maintien en température est supérieure à la pression P₁ pendant l'étape de montée en température.

13. Procédé de fabrication d'une pièce solide par traitement de frittage à chaud selon la revendication précédente **caractérisé en ce que** ladite pression pendant l'étape de maintien en température oscille régulièrement ou sporadiquement entre une valeur Pₘᵢₙ et une valeur P_{max.}

14. Procédé de fabrication d'une pièce solide par traitement de frittage à chaud selon la revendication 8 **caractérisé en ce que** la pression pendant ladite deuxième étape de maintien en température oscille régulièrement ou sporadiquement entre une valeur Pₘᵢₙ et une valeur Pₘₐₓ, avec Pₘᵢₙ supérieur à la pression P₁ pendant la première étape de montée en température.

15. Procédé de fabrication d'une pièce solide par traitement de frittage à chaud selon la revendication 1 **caractérisé en ce que** ladite étape de refroidissement est réalisée à une vitesse V₁ supérieure à 15 °C/mn jusqu'à une température de 40°C.

16. Procédé de fabrication d'une pièce solide par traitement de frittage à chaud selon la revendication 1 **caractérisé en ce que** ladite étape de refroidissement comporte une première phase de refroidissement rapide à une vitesse V₁ suivie par possiblement par une deuxième phase de refroidissement lente à une vitesse V₂ inférieure à V₁.

17. Article solide obtenu par l'application d'un procédé de fabrication conforme à l'une au moins des revendications précédentes **caractérisé en ce que** ladite matière organique solide est de nature végétale.

18. Article solide obtenu par l'application d'un procédé de fabrication conforme à l'une au moins des revendications 1 à 13 **caractérisé en ce que** ladite matière organique solide comprend des kératines.

19. Article solide obtenu par l'application d'un procédé de fabrication conforme à l'une au moins des revendications 1 à 13 **caractérisé en ce que** ladite matière organique solide comprend du collagène.

20. Article solide obtenu par l'application d'un procédé de fabrication conforme à l'une au moins des revendications 1 à 13 **caractérisé en ce que** ladite matière organique solide comprend de la conchyoline.

21. Article solide obtenu par l'application d'un procédé de fabrication conforme à l'une au moins des revendications 1 à 13 **caractérisé en ce que** ladite matière organique solide comprend des fibroïnes.

22. Article solide obtenu par l'application d'un procédé de fabrication conforme à l'une au moins des revendications 1 à 13 **caractérisé en ce que** ladite matière organique solide comprend de la lignine.

23. Article solide obtenu par l'application d'un procédé de fabrication conforme à l'une au moins des revendications 1 à 13 **caractérisé en ce que** ladite matière organique solide comprend des sarments de vigne.

24. Couverts ou vaisselle alimentaires obtenu par l'application d'un procédé de fabrication conforme à l'une au moins des revendications 1 à 13 **caractérisé en ce que** ladite matière organique solide comprend des constituants végétaux.

## Patentansprüche

1. Verfahren zum Herstellen eines festen Teils durch Heißsinterbehandlung von mindestens einem organischen Feststoff, der weniger als 40 % Skleroproteine enthält, das Verfahren umfassend:
• eine Phase zum Erhitzen des Stoffs bei einem Druck P₁ zum Erreichen einer kritischen Temperatur Tc zwischen T_{Abbau} und T_{Denaturierung}, wobei:
∘ T_{Abbau} die Abbautemperatur des den organischen Stoff bildenden Proteins bezeichnet, das die niedrigste Abbautemperatur aufweist,
∘ T_{Denaturierung} die Denaturierungstemperatur des den organischen Stoff bildenden Proteins bezeichnet, das die niedrigste Denaturierungstemperatur aufweist
∘ der Druck P₁ zwischen 10 MPa und 25 MPa, wenn der organische Feststoff in der Kammer eine einzige Stoffschicht mit einem einzigen Ursprung ausbildet, und über 10 MPa liegt, wenn der organische Stoff in der Kammer mindestens zwei Schichten ausbildet, eine erste Schicht aus einem organischen Stoff mit einem ersten Ursprung und eine zweite Schicht aus einem organischen Stoff mit einem zweiten Ursprung, der sich von dem ersten Ursprung unterscheidet
• eine Phase zum Halten der Temperatur bei der kritischen Temperatur T_{C} während eines Zeitraums von weniger als sechzig Minuten,
• eine Phase zum Abkühlen unter Belastung bei einem Druck P₂.

2. Verfahren zum Herstellen eines festen Teils durch Heißsinterbehandlung nach Anspruch 1, **dadurch gekennzeichnet, dass** die Erhitzungsphase in einer Kompressionskammer durchgeführt wird.

3. Verfahren zum Herstellen eines festen Teils durch Heißsinterbehandlung nach Anspruch 1, **dadurch gekennzeichnet, dass** die Phase durch eine Heizplatte durchgeführt wird.

4. Verfahren zum Herstellen eines festen Teils durch Heißsinterbehandlung nach Anspruch 1, **dadurch gekennzeichnet, dass** die Phase durch Induktion durchgeführt wird.

5. Verfahren zum Herstellen eines festen Teils durch Heißsinterbehandlung nach Anspruch 1, **dadurch gekennzeichnet, dass** es auf zerkleinerte oder unzerkleinerte organische Feststoffe mit mindestens zwei unterschiedlichen Ursprüngen angewendet wird.

6. Verfahren zum Herstellen eines festen Teils durch Heißsinterbehandlung nach Anspruch 5, **dadurch gekennzeichnet, dass** die organischen Feststoffe mit unterschiedlichen Ursprüngen eine Mischung bilden.

7. Verfahren zum Herstellen eines festen Teils durch Heißsinterbehandlung nach Anspruch 5, **dadurch gekennzeichnet, dass** die zerkleinerten organischen Feststoffe mit unterschiedlichen Ursprüngen übereinanderliegende Schichten bilden.

8. Verfahren zum Herstellen eines festen Teils durch Heißsinterbehandlung nach Anspruch 1, **dadurch gekennzeichnet, dass** die Heißsinterbehandlung eine SPS-Behandlung mit elektrischen Feldern ist.

9. Verfahren zum Herstellen eines festen Teils durch Heißsinterbehandlung nach Anspruch 1, **dadurch gekennzeichnet, dass** die Abbautemperatur T_{Abbau} und/oder die Denaturierungstemperatur T_{Denaturierung} durch DSC des organischen Stoffes bestimmt wird.

10. Verfahren zum Herstellen eines festen Teils durch Heißsinterbehandlung nach Anspruch 1, **dadurch gekennzeichnet, dass** die kritische Temperatur T_{C} höher als Tₘᵢₙ ist, die der Denaturierungstemperatur des den organischen Stoff bildenden Proteins entspricht, das die höchste Denaturierungstemperatur aufweist.

11. Verfahren zum Herstellen eines festen Teils durch Heißsinterbehandlung nach Anspruch 1, **dadurch gekennzeichnet, dass** es ferner eine zweite Sequenz eines Temperaturanstiegs bis zu einer kritischen Temperatur T_{C2}, die höher als T_{C} und niedriger als T_{Abbau} ist, und einer Beibehaltung nach dem ersten Beibehalteschritt und vor dem Abkühlschritt vorweist.

12. Verfahren zum Herstellen eines festen Teils durch Heißsinterbehandlung nach Anspruch 1, **dadurch gekennzeichnet, dass** Druck P_{Halten} während des Temperaturhalteschritts höher als der Druck P₁ während des Temperaturanstiegsschritts ist.

13. Verfahren zum Herstellen eines festen Teils durch Heißsinterbehandlung nach dem vorstehenden Anspruch, **dadurch gekennzeichnet, dass** der Druck während des Temperaturhalteschritts regelmäßig oder sporadisch zwischen einem Wert Pₘᵢₙ und einem Wert Pₘₐₓ schwankt.

14. Verfahren zum Herstellen eines festen Teils durch Heißsinterbehandlung nach Anspruch 8, **dadurch gekennzeichnet, dass** der Druck während des zweiten Temperaturhalteschritts regelmäßig oder sporadisch zwischen einem Wert Pₘᵢₙ und einem Wert Pₘₐₓ schwankt, wobei Pₘᵢₙ höher als der Druck P₁ während des ersten Temperaturanstiegsschritts ist.

15. Verfahren zum Herstellen eines festen Teils durch Heißsinterbehandlung nach Anspruch 1, **dadurch gekennzeichnet, dass** der Abkühlschritt mit einer Geschwindigkeit V₁ über 15 °C/mn bis zu einer Temperatur von 40 °C durchgeführt wird.

16. Verfahren zum Herstellen eines festen Teils durch Heißsinterbehandlung nach Anspruch 1, **dadurch gekennzeichnet, dass** der Abkühlschritt eine erste Phase zum schnellen Abkühlen mit einer Geschwindigkeit V₁ gefolgt von eventuell von einer zweiten Phase zum langsamen Abkühlen mit einer Geschwindigkeit V₂ vorweist, die kleiner als V₁ ist.

17. Fester Gegenstand, der durch die Anwendung eines Herstellungsverfahrens nach mindestens einem der vorstehenden Ansprüche erhalten wird,
**dadurch gekennzeichnet, dass** der organische Feststoff pflanzlichen Ursprungs ist.

18. Fester Gegenstand, der durch die Anwendung eines Herstellungsverfahrens nach mindestens einem der Ansprüche 1 bis 13 erhalten wird, **dadurch gekennzeichnet, dass** der organische Feststoff Keratine umfasst.

19. Fester Gegenstand, der durch die Anwendung eines Herstellungsverfahrens nach mindestens einem der Ansprüche 1 bis 13 erhalten wird, **dadurch gekennzeichnet, dass** der organische Feststoff Kollagen umfasst.

20. Fester Gegenstand, der durch die Anwendung eines Herstellungsverfahrens nach mindestens einem der Ansprüche 1 bis 13 erhalten wird, **dadurch gekennzeichnet, dass** der organische Feststoff Conchiolin umfasst.

21. Fester Gegenstand, der durch die Anwendung eines Herstellungsverfahrens nach mindestens einem der Ansprüche 1 bis 13 erhalten wird, **dadurch gekennzeichnet, dass** der organische Feststoff Fibroine umfasst.

22. Fester Gegenstand, der durch die Anwendung eines Herstellungsverfahrens nach mindestens einem der Ansprüche 1 bis 13 erhalten wird, **dadurch gekennzeichnet, dass** der organische Feststoff Lignin umfasst.

23. Fester Gegenstand, der durch die Anwendung eines Herstellungsverfahrens nach mindestens einem der Ansprüche 1 bis 13 erhalten wird,
**dadurch gekennzeichnet, dass** der organische Feststoff Weinranken umfasst.

24. Lebensmittelbesteck oder -geschirr, das durch die Anwendung eines Herstellungsverfahrens nach mindestens einem der Ansprüche 1 bis 13 erhalten wird, **dadurch gekennzeichnet, dass** der organische Feststoff Pflanzenbestandteile umfasst.

## Claims

1. Method for producing a solid part by hot sintering treatment of at least one solid organic material containing less than 40% scleroproteins, the method comprising:
• A phase of heating said material, at a pressure P₁ in order to reach a critical temperature Tc of between T_{degradation} and T_{denaturation} Wherein:
∘ T_{degradation} refers to the degradation temperature of the constituent protein of said organic material having the lowest degradation temperature,
∘ T_{denaturation} refers to the denaturation temperature of the constituent protein of said organic material having the lowest denaturation temperature
∘ The pressure P₁ is between 10 MPa and 25 MPa, when said solid organic material forms a single layer of material of a single nature in said chamber, and greater than 10 MPa when said organic material forms at least two layers in said chamber, a first layer of an organic material of a first nature and a second layer of an organic material of a second nature different from said first nature
• A phase of holding the temperature at said critical temperature T_{c} for a period of less than sixty minutes,
• A phase of cooling under stress, at a pressure P₂.

2. Method for producing a solid part by hot sintering treatment according to claim 1, **characterized in that** said heating phase is carried out in a compression chamber.

3. Method for producing a solid part by hot sintering treatment according to claim 1, **characterized in that** said phase is carried out by means of a heating plate.

4. Method for producing a solid part by hot sintering treatment according to claim 1, **characterized in that** said phase is carried out by induction.

5. Method for producing a solid part by hot sintering treatment according to claim 1, **characterized in that** it is applied to ground or unground solid organic materials of at least two different natures.

6. Method for producing a solid part by hot sintering treatment according to claim 5, **characterized in that** said solid organic materials of different natures constitute a mixture.

7. Method for producing a solid part by hot sintering treatment according to claim 5, **characterized in that** said ground solid organic materials of different natures constitute stacked layers.

8. Method for producing a solid part by hot sintering treatment according to claim 1, **characterized in that** said hot sintering treatment is an SPS treatment with electric fields.

9. Method for producing a solid part by hot sintering treatment according to claim 1, **characterized in that** said degradation temperature T_{degradation} and/or said denaturation temperature T_{denaturation} is determined by DSC of said organic material.

10. Method for producing a solid part by hot sintering treatment according to claim 1, **characterized in that** said critical temperature T_{C} is greater than Tₘᵢₙ corresponding to the denaturation temperature of the constituent protein of said organic material having the highest denaturation temperature.

11. Method for producing a solid part by hot sintering treatment according to claim 1, **characterized in that** it further comprises a second sequence of temperature increase up to a critical temperature T_{C2} which is higher than T_{C} and lower than T_{degradation} and held level, after said first step of holding level and before the cooling step.

12. Method for producing a solid part by hot sintering treatment according to claim 1, **characterized in that** the pressure P_{holding} during the temperature-holding step is greater than the pressure P₁ during the temperature-increasing step.

13. Method for producing a solid part by hot sintering treatment according to the preceding claim, **characterized in that** said pressure during the temperature-holding step oscillates regularly or sporadically between a value Pₘᵢₙ and a value Pₘₐₓ.

14. Method for producing a solid part by hot sintering treatment according to claim 8, **characterized in that** the pressure during said second temperature-holding step oscillates regularly or sporadically between a value Pₘᵢₙ and a value Pₘₐₓ, with Pₘᵢₙ greater than the pressure P₁ during the first temperature-increasing step.

15. Method for producing a solid part by hot sintering treatment according to claim 1, **characterized in that** said cooling step is carried out at a speed V₁ greater than 15°C/mn down to a temperature of 40°C.

16. Method for producing a solid part by hot sintering treatment according to claim 1, **characterized in that** said cooling step comprises a first rapid cooling phase at a speed V₁, followed by possibly by a second slow cooling phase at a speed V₂ lower than V₁.

17. Solid article obtained by using a production method in accordance with at least one of the preceding claims, **characterized in that** said solid organic material is plant based.

18. Solid article obtained by using a production method in accordance with at least one of claims 1 to 13, **characterized in that** said solid organic material comprises keratins.

19. Solid article obtained by using a production method in accordance with at least one of claims 1 to 13, **characterized in that** said solid organic material comprises collagen.

20. Solid article obtained by using a production method in accordance with at least one of claims 1 to 13, **characterized in that** said solid organic material comprises conchiolin.

21. Solid article obtained by using a production method in accordance with at least one of claims 1 to 13, **characterized in that** said solid organic material comprises fibroins.

22. Solid article obtained by using a production method in accordance with at least one of claims 1 to 13, **characterized in that** said solid organic material comprises lignin.

23. Solid article obtained by using a production method in accordance with at least one of claims 1 to 13, **characterized in that** said solid organic material comprises vine shoots.

24. Cutlery or tableware obtained by using a production method in accordance with at least one of claims 1 to 13, **characterized in that** said solid organic material comprises plant components.
